# EUROPÄISCHE PATENTSCHRIFT

(11) **EP 3 014 218 B1**
(45) Veröffentlichungstag und Bekanntmachung des Hinweises auf die Patenterteilung: **20.02.2019**
(21) Anmeldenummer: 14725041.9
(22) Anmeldetag: 07.05.2014
(51) Int. Cl.: G01D 3/036, G01F 1/68, G01F 1/698

(54) **VERFAHREN ZUM BETREIBEN EINER SENSORANORDNUNG**
METHOD FOR OPERATING A SENSOR ASSEMBLY
PROCÉDÉ DE FONCTIONNEMENT D'UN ENSEMBLE DÉTECTEUR

(30) Priorität: 27.06.2013 DE 102013212485
(43) Veröffentlichungstag der Anmeldung: 04.05.2016
(73) Patentinhaber: Robert Bosch GmbH, 70442 Stuttgart (DE)
(72) Erfinder: FIX, Richard, 70839 Gerlingen (DE); KRAUSS, Andreas, 72072 Tuebingen (DE); BADEJA, Michael, 71229 Leonberg (DE)
(86) Internationale Anmeldenummer: PCT/EP2014/059350
(87) Internationale Veröffentlichungsnummer: WO 2014/206618

(56) Entgegenhaltungen:
- EP-A1- 1 530 028
- DE-A1- 19 642 107
- US-A- 5 551 283

## Beschreibung

Die Erfindung betrifft ein Verfahren zum Betreiben einer Sensoranordnung gemäß Anspruch 1 und eine Sensoranordnung gemäß Anspruch 10.

### Stand der Technik

Aus DE 10 2005 029 841 A1 ist eine mikromechanische Vorrichtung mit integrierter Heizung bekannt. Die mikromechanische Vorrichtung kann ein Sensorelement aufweisen. Das Sensorelement ist beispielsweise als Temperatursensor ausgebildet. Weiterhin kann das Sensorelement in Form eines Drucksensors ausgebildet sein.

Aus DE 10 2005 042 485 A1 ist eine Sensoranordnung für einen Mediensensor, einen Ölzustandssensor und ein Verfahren zur Herstellung einer Sensoranordnung bekannt. Die Sensoranordnung kann monolithisch integriert eine Mehrzahl von Sensorstrukturen zur Bestimmung einer Mehrzahl von physikalischen und/oder chemischen Größen eines an die Sensoranordnung angrenzenden Mediums aufweisen.

Das Dokument DE19642107 offenbart eine Sensoranordnung gemäß dem Stand der Technik.

### Offenbarung der Erfindung

Die Aufgabe der Erfindung besteht darin, ein verbessertes Verfahren zum Betreiben einer Sensoranordnung und eine verbesserte Sensoranordnung bereitzustellen.

Die Aufgaben der Erfindung werden durch das Verfahren gemäß Patentanspruch 1 und durch die Sensoranordnung gemäß Patentanspruch 10 gelöst. Weitere vorteilhafte Ausführungsformen sind in den abhängigen Ansprüchen angegeben. Ein Vorteil des beschriebenen Verfahrens besteht darin, dass eine Sensoranordnung mit einem ersten und einem zweiten Sensor betrieben werden kann, wobei der erste Sensor oberhalb der Umgebungstemperatur und der zweite Sensor bei Umgebungstemperatur betrieben wird. Da die erhöhte Temperatur für den zweiten Sensor nachteilig ist, werden die Sensoren in verschiedenen zeitlichen Phasen für eine Messung eingesetzt. In der ersten Phase, in der eine Aufheizung des ersten Sensors auf die Betriebstemperatur durchgeführt wird, wird gleichzeitig eine Messung mithilfe des ersten Sensors durchgeführt. In einer zweiten Phase, bei der das Heizelement für den ersten Sensor abgeschaltet oder wenigstens in der Leistung reduziert ist, wird eine Messung mithilfe des zweiten Sensors durchgeführt. Da trotz der zwei unterschiedlichen Phasen der zweite Sensor einer gegenüber der Umgebungstemperatur erhöhten Temperatur ausgesetzt ist, wird für die Auswertung der Messung des zweiten Sensors die erhöhte Temperatur berücksichtigt. Somit kann auch der zweite Sensor mit einer ausreichenden Genauigkeit betrieben werden, obwohl der zweite Sensor durch die Anordnung mit dem ersten Sensor auf einer Sensoranordnung einer gegenüber der Umgebungstemperatur erhöhten Temperatur ausgesetzt ist.

In einer Ausführungsform wird die Temperatur der Sensoranordnung erfasst und die Aufheizung während der ersten Phase so gesteuert, dass eine Höchsttemperatur für den zweiten Sensors nicht überschritten wird. Auf diese Weise wird sichergestellt, dass der zweite Sensor noch funktionsfähig ist und die Messung des zweiten Sensors verwendet werden kann.

In einer weiteren Ausführungsform wird die Aufheizung der Sensoranordnung in der Weise begrenzt, dass entweder die erste Phase zeitlich begrenzt wird und/oder ein zeitlicher Abstand zwischen zwei ersten Phasen verlängert wird, um die Höchsttemperatur für den zweiten Sensor nicht zu überschreiten. Somit kann auf einfache Weise die Einhaltung der Höchsttemperatur für den zweiten Sensor gewährleistet werden.

In einer weiteren Ausführungsform wird mit dem zweiten Sensor während der ersten Phase eine Vergleichsmessung durchgeführt. Die Vergleichsmessung kann für eine Bewertung der Funktionsfähigkeit des ersten Sensors und/oder des zweiten Sensors verwendet werden. Auf diese Weise wird eine Überprüfung der Funktionsfähigkeit des ersten und/oder des zweiten Sensors ermöglicht.

In einer weiteren Ausführungsform werden mit zeitlichen Abständen mehrere erste Phasen durchgeführt, wobei die zweite Phase zwischen zwei ersten Phasen durchgeführt wird. Auf diese Weise wird eine intermittierende Verwendung des ersten und des zweiten Sensors erreicht. Dadurch kann erreicht werden, dass Messwerte sowohl vom ersten als auch vom zweiten Sensor nahezu kontinuierlich geliefert werden und trotzdem eine Höchsttemperatur für den zweiten Sensor nicht überschritten wird.

In einer weiteren Ausführung werden erste Phasen für zwei erste Sensoren wenigstens zeitlich versetzt oder zeitlich nacheinander durchgeführt. Auf diese Weise wird eine gegenüber einem gleichzeitigen Betrieb der ersten Phasen der ersten Sensoren reduzierte Temperatur erreicht. Somit wird die Funktionsfähigkeit des oder der zweiten Sensoren weniger beeinträchtigt. Diese Vorgehensweise ergibt den Vorteil, dass die Temperaturerhöhung niedriger ist als bei einem kontinuierlichen Heizbetrieb der ersten Sensoren. Zudem kann auf diese Weise ein geringerer Temperaturgradient über die Ausdehnung der Sensoranordnung beziehungsweise über die Ausdehnung eines zweiten Sensors erreicht werden. Dadurch können ersten Sensoren und zweite Sensoren in einem gemeinsamen Gehäuse angeordnet werden. Das gemeinsame Gehäuse führt zu geringeren Kosten, vor allem bei Sensoren, die einen Medienzugang benötigen wie zum Beispiel Drucksensoren, Gassensoren oder Feuchtigkeitssensoren.

In einer weiteren Ausführungsform wird während der ersten Phase eine Vorheizphase durchgeführt. In der Vorheizphase wird der erste Sensor auf eine erste Temperatur aufgeheizt. In einer folgenden Messphase werden mithilfe des ersten Sensors zwei Messungen bei zwei unterschiedlichen Temperaturen durchgeführt. Dazu wird das Heizelement entsprechend angesteuert, um die zwei unterschiedlichen Temperaturen einzustellen. Durch die zwei Messungen bei zwei unterschiedlichen Temperaturen ist eine genauere Messung durch den ersten Sensor möglich.

In einer weiteren Ausführungsform wird nach der ersten Phase eine Abkühlphase durchgeführt, wobei während der Abkühlphase der erste Sensor eine dritte Messung ausführt. Somit kann ein weiterer Messwert erhalten werden, der zur Überprüfung der Messwerte des ersten Sensors verwendet werden kann.

In einer weiteren Ausführungsform wird unter Berücksichtigung der Leistung des Heizelementes und einer Temperaturmessung auf der Sensoranordnung eine Umgebungstemperatur abgeschätzt. Die abgeschätzte Umgebungstemperatur wird bei einer Auswertung der Messung des zweiten Sensors berücksichtigt. Dabei wird insbesondere die Messung des zweiten Sensors auf die Umgebungstemperatur kalibriert oder die Messung des zweiten Sensors kann auf eine Fehlfunktion überprüft werden. Somit wird zum einen die Messgenauigkeit des zweiten Sensors erhöht und zum anderen kann eine Fehlfunktion des zweiten Sensors einfach erkannt werden.

In einer weiteren Ausführungsform wird die erste Phase dazu verwendet, um eine Erwärmung bzw. ein Ausheizen des zweiten Sensors zu erreichen. Damit kann die Messgenauigkeit des zweiten Sensors verbessert werden. Auf diese Weise kann die erhöhte Betriebstemperatur des ersten Sensors, die eigentlich nachteilig für das Betrieben des zweiten Sensors ist, für eine vorteilhafte Erwärmung bzw. Ausheizung des zweiten Sensors verwendet werden.

Die beschriebene Sensoranordnung eignet sich insbesondere für erste Sensoren, die beispielsweise als Heizplatte mit einer geheizten Membran, als beheizter Sensor, als Massenflusssensor, als Sensor für die Messung einer thermischen Leitfähigkeit, als Gassensor, als beheizter chemischer Gassensor oder als Metalloxidsensor ausgebildet sind. Zudem eignet sich die beschriebene Sensoranordnung in vorteilhafter Weise für zweite Sensoren, die beispielsweise als polymerbeschichteter Sensor, als kapazitiver Sensor, als kalorimetrischer Sensor, als Beschleunigungssensor, als Drehbeschleunigungssensor, als Magnetfeldsensor, als Luftdrucksensor, als Feuchtigkeitssensor, als Gassensor, oder als Sensor mit einem Feldeffekttransistor ausgebildet sind. Bei den beschriebenen Sensoren kann in vorteilhafter Weise zum einen die erhöhte Betriebstemperatur des ersten Sensors toleriert werden und gleichzeitig der zweite Sensor auf einer Sensoranordnung mit dem ersten Sensor mit einer ausreichenden Genauigkeit betrieben werden.

In einer weiteren Ausführungsform sind der erste und der zweite Sensor in einem Gehäuse angeordnet, wobei das Gehäuse einen Medienzugang aufweist. Der erste Sensor ist näher am Medienzugang angeordnet als der zweite Sensor. Dies bietet den Vorteil, dass der erste Sensor, der eine höhere Betriebstemperatur während der ersten Phase aufweist, durch den Medienfluss gekühlt wird. Somit wird der zweite Sensor vor zu hoher Temperatur geschützt. Dabei kann der erste Sensor beispielsweise angrenzend am Medienzugang und/oder direkt unter dem Medienzugang angeordnet sein.

In einer weiteren Ausführungsform ist der Träger aus einem Wärme leitenden Material aufgebaut. Auf diese Weise wird eine gleichmäßige Verteilung der Wärme des ersten Sensors in Bezug auf den zweiten oder mehrere zweite Sensoren erreicht.

In einer weiteren Ausführungsform ist der zweite Sensor auf einer Auswerteschaltung angeordnet. Die Auswerteschaltung ist auf dem Träger angeordnet. Der erste Sensor ist ebenfalls auf dem Träger angeordnet. Durch diese Anordnung wird eine verbesserte thermische Entkopplung zwischen dem zweiten Sensor und dem ersten Sensor erreicht, da die Auswerteschaltung eine thermische Isolierung zwischen dem ersten und dem zweiten Sensor beziehungsweise zwischen dem Träger und dem zweiten Sensor darstellt.

In einer weiteren Ausführungsform ist die Auswerteschaltung über eine thermisch leitende Verbindungsschicht mit dem Träger verbunden. Die Verbindungsschicht kann vorzugsweise als Kleberschicht ausgebildet sein. Durch die thermische Anbindung der Auswerteschaltung wird eine verbesserte Wärmeabfuhr beziehungsweise eine verbesserte thermische Ankopplung des zweiten Sensors an den Träger erreicht.

Die Erfindung wird im Folgenden anhand der Figuren näher erläutert. Es zeigen
Figur 1 eine schematische Darstellung einer Sensoranordnung,
Figur 2 eine schematische Darstellung einer weiteren Ausführungsform einer Sensoranordnung,
Figur 3 eine schematische Darstellung einer weiteren Ausführungsform einer Sensoranordnung,
Figur 4 eine weitere Ausführungsform einer Sensoranordnung,
Figur 5 ein Diagramm über einen zeitlichen Verlauf von ersten Phasen der ersten Sensoren,
Figur 6 ein Diagramm über ein Temperaturprofil der Sensoranordnung gemäß der ersten Phasen der Figur 5,
Figur 7 ein Diagramm über einen weiteren zeitlichen Verlauf von ersten Phasen ,
Figur 8 ein Diagramm über ein resultierendes Temperaturprofil der Sensoranordnung gemäß den ersten Phasen von Figur 7, und
Figur 9 ein Diagramm über einen zeitlichen Verlauf eines Temperaturprofils und eines Messzyklus.

In den letzten Jahren wurden viele Sensoren in Siliziumtechnologie beispielsweise auf MEMS Basis entwickelt, die zur Messung verschiedener physikalischer Größen oder chemischer Größen verwendet werden können. Die Sensoren können in zwei Arten von Sensoren eingeteilt werden. Die ersten Sensoren sollten bei einer Betriebstemperatur betrieben werden, die deutlich über der Umgebungstemperatur liegt. Als Umgebungstemperatur werden beispielsweise 25°C angenommen. Die Betriebstemperatur der ersten Sensoren liegt in der Regel mehr als 30 ° über der Umgebungstemperatur. Die zweiten Sensoren sollten bei Umgebungstemperatur oder in einem Bereich um eine Umgebungstemperatur betrieben werden. Der Bereich um die Umgebungstemperatur kann beispielsweise ± 10 ° betragen. Die zweiten Sensoren funktionieren bei Erwärmung über die Umgebungstemperatur von 25°C mit einer schlechteren Genauigkeit.

Als Beispiel für erste Sensoren können Massenflusssensoren oder Sensoren für die Messung der thermischen Leitfähigkeit oder beheizte chemische Gassensoren wie zum Beispiel Metalloxidsensoren genannt werden.

Als zweite Sensoren sind zum Beispiel Drucksensoren zu nennen, bei denen eine Erwärmung zum Beispiel der piezoelektrischen Aufnehmelemente zu einer Verfälschung des Messergebnisses führt. Zwar kann in einem Drucksensor neben einem Druck- meist auch ein Temperaturmesselement vorhanden sein, das für eine Temperaturkorrektur herangezogen werden kann. Die Temperaturkompensation kann jedoch nur dann genau durchgeführt werden, wenn alle Elemente des Drucksensors im thermischen Gleichgewicht sind. Wenn zum Beispiel eine ungleichmäßige Temperaturerhöhung am Drucksensor durch eine Erwärmung von außen stattfindet, das heißt, wenn ein Temperaturgradient am Drucksensor auftritt, kann dies zu falschen Ergebnissen bei der Temperaturkorrektur führen. Als weitere zweite Sensoren können zum Beispiel polymerbeschichtete, kapazitive, kalorimetrisch messende Sensoren angesehen werden, die auf einer temperaturabhängigen Adsorption beziehungsweise einer temperaturabhängigen Verteilung von Analyten zwischen Luft und Polymer beruhen.

Eine Grundidee der Erfindung besteht nun darin, erste und zweite Sensoren auf einer Sensoranordnung gemeinsam zu betreiben und die eigentlich unerwünschte Temperaturerhöhung für die zweiten Sensoren auszugleichen beziehungsweise in vorteilhafter Weise auszunutzen.

Die Erfindung wird im Folgenden anhand eines ersten Sensors und eines zweiten Sensors beschrieben. Die Erfindung kann jedoch auch bei mehreren ersten Sensoren und/oder mehreren zweiten Sensoren für eine Sensoranordnung eingesetzt werden.

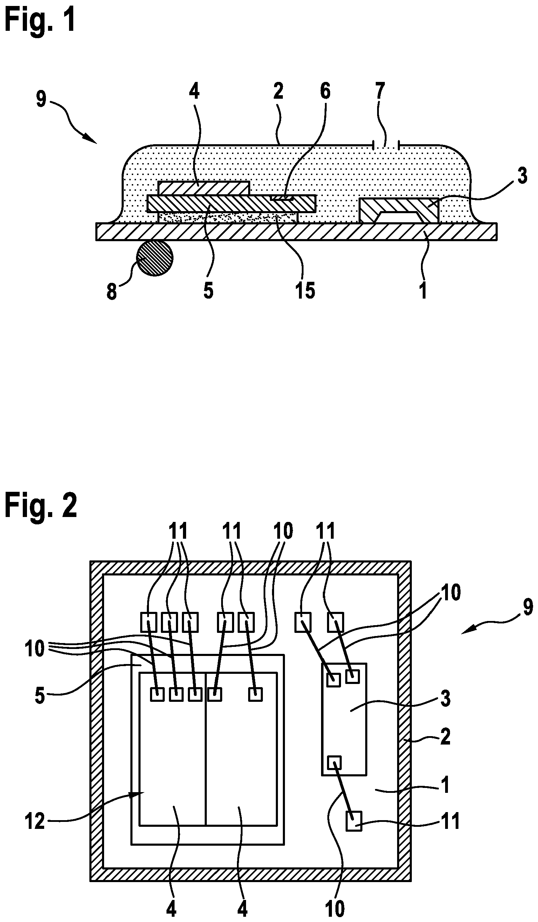

Figur 1 zeigt in einem schematischen Querschnitt eine Sensoranordnung 9, die einen Träger 1 aufweist, wobei auf dem Träger 1 ein erster Sensor 3 und ein zweiter Sensor 4 angeordnet sind. In dem dargestellten Ausführungsbeispiel ist der erste Sensor 3 direkt auf dem Träger 1 angeordnet. Der zweite Sensor 4 ist auf einer Auswerteschaltung 5 angeordnet, wobei die Auswerteschaltung 5 auf dem Träger 1 angeordnet ist. Abhängig von der gewählten Ausführungsform kann der zweite Sensor 4 auch direkt auf dem Träger 1 angeordnet sein. Abhängig von der gewählten Ausführungsform kann auf oder in der Auswerteschaltung 5 auch ein weiterer zweiter Sensor 6 angeordnet sein. Die Auswerteschaltung 5 ist mit dem ersten und/oder dem oder den zweiten Sensoren 3, 4 verbunden, um die Messsignale des ersten Sensors 3 und des oder der zweiten Sensoren 4 auszuwerten und entsprechende Signale nach außen abzugeben.

Weiterhin weist der Träger 1 elektrische Anschlüsse 8 auf, die beispielsweise in Form von Lotverbindungen wie zum Beispiel Lotkugeln ausgebildet sind. Abhängig von der gewählten Ausführungsform kann der Träger 1 wärmeleitend ausgebildet sein und zusätzlich Verdrahtungsebenen für eine elektrische Verbindung zwischen dem ersten Sensor 3 und der Auswerteschaltung 5 bzw. zwischen der Auswerteschaltung 5 und den elektrischen Anschlüssen 8 aufweisen. Abhängig von der gewählten Ausführungsform können auch mehrere erste Sensoren 3 und/oder mehrere zweite Sensoren 4 auf dem Träger 1 angeordnet sein.

In der dargestellten Ausführungsform ist der Träger 1 mit einem Gehäuse 2 abgedeckt. Abhängig von der gewählten Ausführungsform kann auf das Gehäuse 2 verzichtet werden oder anstelle eines Gehäuses 2 eine Einbettung in ein Moldmaterial vorliegen. In dem dargestellten Ausführungsbeispiel weist das Gehäuse 2 einen Medienzugang 7 in Form einer Öffnung auf, so dass ein Medium wie z.B. ein Gas oder eine Flüssigkeit in das Gehäuse 2 strömen kann. Der Medienzugang 7 ist nahe dem ersten Sensor 3, insbesondere über dem ersten Sensor 3 angeordnet.

Der erste Sensor 3 ist ein Sensor, dessen normale Betriebstemperatur deutlich über der Umgebungstemperatur liegt. Beispielsweise kann der erste Sensor 3 als beheizter Sensor, als Heizplatte mit einer geheizten Membran, als Massenflusssensor, als Sensor für die Messung einer thermischen Leitfähigkeit, als Gassensor, als beheizter chemischer Gassensor und/oder als Metalloxidsensor ausgebildet sein. Die ersten Sensoren 3 können auch als beheizte Sensoren ausgebildet sein. Abhängig von der gewählten Ausführungsform können jedoch auch Heizelemente vorgesehen sein, die unabhängig von den ersten Sensoren 3 vorgesehen sind und zum Aufheizen der ersten Sensoren 3 auf die erhöhte Betriebstemperatur verwendet werden. Beispielsweise kann ein erster Sensor 3 in Form einer siliziumbasierten Mikroheizplatte ausgebildet sein, die ein auf Indiumoxid oder auf Zinnoxid basierendes Metalloxid aufweist.

Die zweiten Sensoren sind als Sensoren ausgebildet, deren normale Betriebstemperatur im Bereich der Umgebungstemperatur liegt. Der zweite Sensor ist beispielsweise als polymerbeschichteter Sensor, als kapazitiver Sensor, als kalorimetrisch messender Sensor, als Beschleunigungssensor, als Drehbeschleunigungssensor, als Magnetfeldsensor, als Luftdrucksensor, als Feuchtigkeitssensor, als Gassensor und/oder als Sensor mit Feldeffekttransistoren ausgebildet.

Der Träger 1 stellt eine Grundplatte dar, die beispielsweise in Form einer dünnen Leiterplatte ausgebildet ist. Die Leiterplatte kann elektrische Kontakte auf der Oberseite, auf der Unterseite und/oder Verdrahtungsebenen zwischen der Oberseite und der Unterseite aufweisen. Die Verdrahtungsebenen bieten nahezu durchgehende, elektrisch und thermisch gut leitfähige Metallebenen, die eine gute elektrische Abschirmung ermöglichen. Dies wird beispielsweise durch die Masseebene erreicht.

Der zweite Sensor 4 ist vorzugsweise thermisch gut leitend an den Träger 1 angekoppelt. Dies wird beispielsweise durch eine thermisch gut leitfähige Schicht wie zum Beispiel eine thermisch leitende Kleberschicht erreicht. In der dargestellten Ausführungsform ist vorzugweise die Auswerteschaltung 5 über eine thermisch gut leitende Verbindungsschicht 15 wie zum Beispiel eine thermisch leitende Kleberschicht mit dem Träger 1 verbunden. Durch die thermische Ankopplung wird eine geringere Temperaturdifferenz zur Umgebungstemperatur erreicht. Zudem werden Temperaturgradienten innerhalb der Sensoranordnung und insbesondere über einen zweiten Sensor 4 möglichst gering gehalten beziehungsweise vermieden.

Da der erste Sensor 3 möglichst nah am Medienzugang angeordnet ist, wird eine gute Wärmeabfuhr aus dem Gehäuse 2 durch Konvektion des Mediums ermöglicht. Auf diese Weise wird die Erwärmung des Gehäuses 2 insgesamt möglichst gering gehalten. Für einen ersten Sensor 3 kann durch Weglassen von Metallisierungen im Träger 1 die thermische Leitfähigkeit reduziert werden, so dass die thermische Kopplung zwischen dem ersten und dem zweiten Sensor 3,4 schlechter ist und mehr Energie von den ersten Sensoren 3 zum Beispiel über das Gehäuse 2 oder den Träger 1 direkt an die Umgebung in der Nähe des Sensors 3 abfließen kann. Vorzugsweise ist eine möglichst geringe thermische Ankopplung des geheizten Bereichs des ersten Sensors und des Trägers 1 vorgesehen. Dies kann beispielsweise dadurch erreicht werden, dass der erste Sensor 1 als thermisch von der Unterlage entkoppelter miniaturisierter Sensor mit einer Heizplatte mit einer geheizten Membran ausgebildet ist.

Weiterhin ist es vorteilhaft, um eine Temperaturdifferenz zwischen zweiten Sensoren 4 und der Umgebung möglichst gering zu halten, viele thermisch gut leitfähige Anschlüsse wie zum Beispiel Lotverbindungen und elektrische Leitungen beziehungsweise Metallisierungsebenen in der Nähe der Sensoren vorzusehen. Beispielsweise können bei einem Ball-Grid-Array-Gehäuse möglichst viele Lotverbindungen zu einer weiteren Leiterplatte vorgesehen sein. Weiterhin kann durch eine enge Anordnung von zweiten Sensoren, die auf einen Temperaturgradienten empfindlich reagieren, auf einem eigenen Element der Temperaturgradient zwischen den zweiten Sensoren gering gehalten werden. Beispielsweise ist in dem dargestellten Ausführungsbeispiel ein Drucksensor und ein Temperatursensor auf der Auswerteschaltung 5 angeordnet. Anstelle der Auswerteschaltung kann auch eine separate Trägerplatte vorgesehen sein, auf der die zweiten Sensoren angeordnet sind, wobei die separate Trägerplatte auf der Trägerplatte 1 befestigt ist.

Die Sensoranordnung 9 kann beispielsweise in Mobilfunkgeräten, in Haushaltsgeräten, in Gaswarnsystemen, in Medizintechnikgeräten wie zum Beispiel Atemgasanalyse, in Lab-on-Chip-Analytik und für einen Einsatz in Flüssigkeiten wie zum Beispiel für eine Kraftstoffanalyse oder Körperflüssigkeiten eingesetzt werden.

Figur 2 zeigt eine weitere schematische Darstellung einer Sensoranordnung 9 mit Blick von oben. Auf dem Träger 1 ist ein erster Sensor 3 angeordnet, der beispielsweise in Form eines Gassensors mit einer Mikroheizplatte ausgebildet ist. Der erste Sensor 3 ist über Kontaktdrähte 10 mit Kontaktflächen 11 des Trägers 1 elektrisch leitend verbunden. Neben dem ersten Sensor 3 sind zwei zweite Sensoren 4 angeordnet, die in einem Element 12 integriert sind. Das Element 12 wiederum ist auf einer Auswerteschaltung 5 angeordnet. Die Auswerteschaltung 5 liegt auf dem Träger 1 auf. Weiterhin sind die zweiten Sensoren 4 über Kontaktdrähte 10 mit Kontaktflächen 11 des Trägers 1 elektrisch verbunden. Die Auswerteschaltung 5 ist mit nicht dargestellten elektrischen Kontakten sowohl mit dem ersten als auch mit dem zweiten Sensor 3, 4 und mit dem Träger 1 verbunden. In Figur 2 ist im Querschnitt das Gehäuse 2 dargestellt, das den ersten Sensor 3 und die zweiten Sensoren 4 mit der Auswerteschaltung 5 umgibt. Das Element 12 kann z.B. in Form eines weiteren Trägers oder eines Substrates ausgebildet sein.

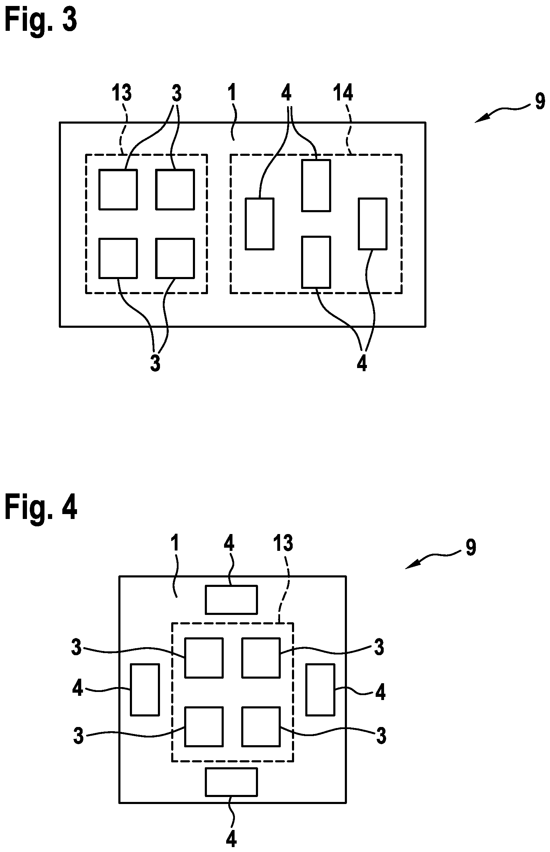

Figur 3 zeigt eine weitere Ausführungsform einer Sensoranordnung 9, bei der vier erste Sensoren 3 räumlich getrennt von vier zweiten Sensoren 4 auf einem Träger 1 angeordnet sind. Die ersten Sensoren 3 sind in einem ersten Bereich 13 angeordnet. Davon beabstandet sind die zweiten Sensoren 4 in einem zweiten Bereich 14 angeordnet. Der erste und der zweite Bereich 13,14 sind in Form von gestrichelten Linien gekennzeichnet. Auf diese Weise ist es möglich, wenigstens für einzelne zweite Sensoren 4 einen möglichst großen Abstand zu den ersten Sensoren 3 vorzugeben. Dadurch ist die thermische Beeinflussung dieser zweiten Sensoren 4 durch die ersten Sensoren 3 reduziert.

Figur 4 zeigt eine weitere Ausführungsform einer Sensoranordnung 9. Bei dieser Ausführungsform sind die ersten Sensoren 3 in einem ersten Bereich 13 angeordnet, der mittig auf dem Träger 1 angeordnet ist. Der erste Bereich 13 ist in Form von gestrichelten Linien gekennzeichnet. Zweite Sensoren 4 sind um den ersten Bereich 13 herum verteilt angeordnet. Auf diese Weise weisen die zweiten Sensoren 4 einen möglichst gleichen Abstand zum ersten Bereich 13 auf. Dadurch erfahren die zweiten Sensoren 4 einen möglichst gleichen Wärmeeintrag durch die ersten Sensoren 3.

Im Folgenden wird das Verfahren zum Betreiben der Sensoren näher erläutert. Eine Grundidee der Erfindung besteht darin, die beheizten ersten Sensoren in ersten Phasen zu beheizen und Messungen durchzuführen. Die nicht beheizten zweiten Sensoren 4 werden bevorzugt in einer zeitlichen zweiten Phase für eine Messerfassung verwendet. Die zeitlich zweiten Phasen sind zeitlich versetzt zu den zeitlich ersten Phasen. Somit wird ein intermittierender zeitlicher Betrieb der ersten Sensoren verwendet. Dieses Verfahren bietet den Vorteil, dass die Temperaturerhöhung der Sensoranordnung insgesamt niedriger ist als bei einem kontinuierlichen Heizbetrieb des oder der ersten Sensoren 3. Zudem kann auf diese Weise ein geringerer Temperaturgradient über die Ausdehnung der zweiten Sensoren 4 beziehungsweise über die Ausdehnung des Trägers 1 erreicht werden. Während einer geheizten ersten Phase kann nur ein erster Sensor 3, mehrere erste Sensoren 3 oder alle ersten Sensoren 3 der Sensoranordnung 9 betrieben werden.

In den nicht geheizten zweiten Phasen kann einer oder mehrere zweite Sensoren 4 für eine Messwerterfassung verwendet werden. Somit können während der ersten Phase im Heizbetrieb mithilfe der ersten Sensoren 3 entsprechende Messungen für physikalische und/oder chemische Größen durchgeführt werden. Zudem können in der zweiten Phase Messungen für physikalische und/oder chemische Größen mithilfe der zweiten Sensoren 4 durchgeführt werden. Auf diese Weise kann in der zweiten Phase ohne Beheizung ein Zeitintervall mit definiertem zeitlichen Temperaturgradienten oder näherungsweise konstanter Temperatur für die Messung mit den zweiten Sensoren 4 realisiert werden. Die Messwerterfassung und/oder Messwertauswertung wird von der Auswerteschaltung 5 durchgeführt. Durch einen alternierenden Betrieb der ersten Sensoren 3 kann beispielsweise ein konstanter Temperaturgradient bei den zweiten Sensoren 4 erzeugt werden. Der Temperaturgradient kann z.B. bei einer Korrektur der Messwerte des oder der zweiten Sensoren berücksichtigt werden.

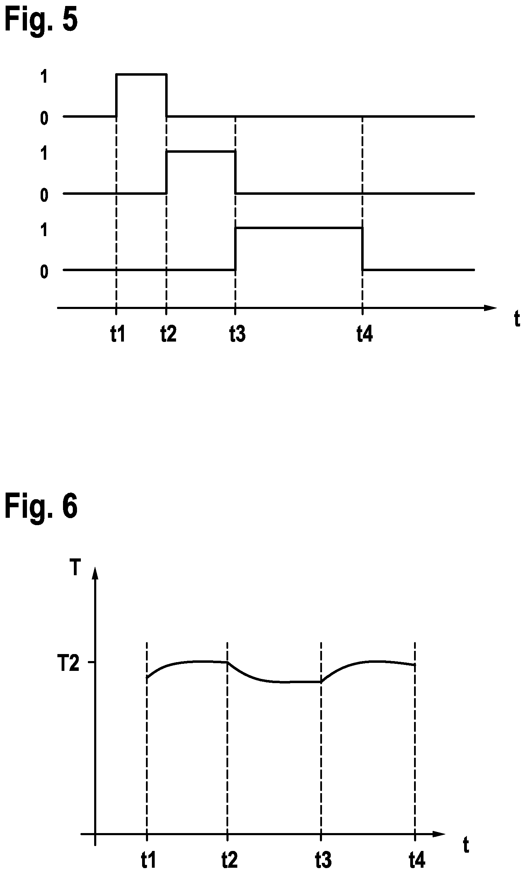

Figur 5 zeigt in einer schematischen Darstellung drei Kennlinien für einen Aktivierungszustand von drei ersten Sensoren 3, die über die Zeit t aufgetragen sind. Ist eine Kennlinie auf dem Wert 0, so wird der erste Sensor 3 nicht betrieben, d.h. nicht beheizt. Ist die Kennlinie auf dem Wert 1, so wird der entsprechende erste Sensor 3 beheizt und es wird wenigstens ein Messwert mit dem ersten Sensor 3 erfasst. Die ersten Phasen der drei ersten Sensoren 3 sind zeitlich nacheinander angeordnet. Die erste Phase eines ersten Sensors 3 reicht von einem ersten Zeitpunkt t1 bis zu einem zweiten Zeitpunkt t2. Die erste Phase eines weiteren ersten Sensors 3 reicht von dem zweiten Zeitpunkt t2 bis zum dritten Zeitpunkt t3. Die erste Phase eines zusätzlichen ersten Sensor 3 reicht von dem dritten Zeitpunkt t3 bis zu einem vierten Zeitpunkt t4. Durch die Aktivierung der beheizten drei ersten Sensoren 3 in zeitlich nacheinander folgender Reihe wird ein im Wesentlichen konstanter Temperaturgradient beziehungsweise ein konstantes Temperaturprofil auf der Sensoranordnung 9 erhalten.

Figur 6 zeigt ein entsprechendes Temperaturprofil, das bei einem Betreiben der drei ersten Sensoren 3 gemäß der Figur 5 auf der Sensoranordnung 9 gemessen wird. Dabei weist die Sensoranordnung 9 zwischen dem ersten und dem vierten Zeitraum t1, t4 eine leicht schwankende, aber annähernd konstante zweite Temperatur T2 auf.

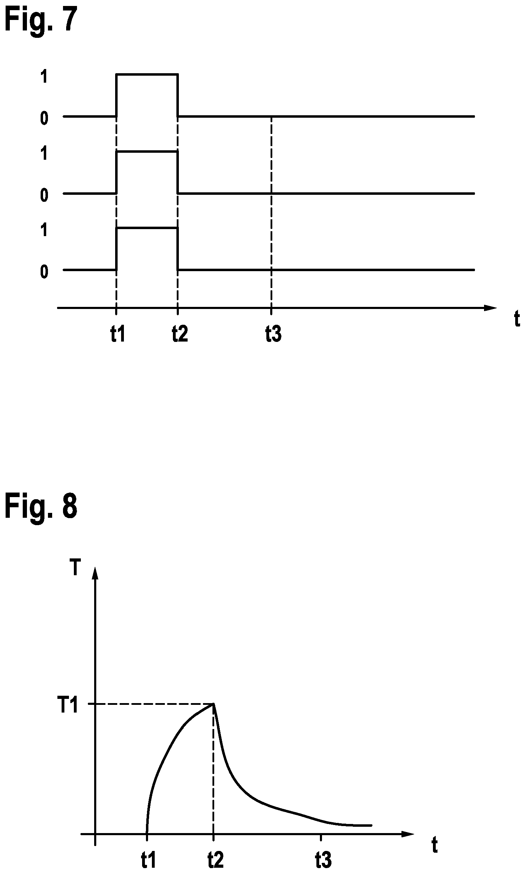

Figur 7 zeigt in einer schematischen Darstellung drei Kennlinien für einen Aktivierungszustand von drei ersten Sensoren 3, die über die Zeit t aufgetragen sind. Ist eine Kennlinie auf dem Wert 0, so wird der erste Sensor 3 nicht betrieben, d.h. nicht beheizt. Ist die Kennlinie auf dem Wert 1, so wird der entsprechende erste Sensor 3 beheizt und es wird wenigstens ein Messwert mit dem ersten Sensor 3 erfasst. Figur 7 zeigt ein Verfahren zum Betreiben von drei ersten Sensoren 3 und zweiten Sensoren 4 einer Sensoranordnung gemäß den Figuren 1 bis 4. Bei dieser Ausführungsform werden in der ersten Phase, die zwischen einem ersten Zeitpunkt t1 und einem zweiten Zeitpunkt t2 liegt, Messungen mithilfe der ersten Sensoren 3 durchgeführt. Dabei werden die ersten Sensoren 3 auf die benötigte Betriebstemperatur durch entsprechende eigene oder zusätzliche Heizelemente aufgeheizt. In einer anschießenden zweiten Phase, die zwischen dem zweiten Zeitpunkt t2 und einem dritten Zeitpunkt t3 liegt, werden Messungen mit dem oder den zweiten Sensoren 4 durchgeführt.

Das beschriebene Verfahren kann beispielsweise dazu eingesetzt werden, um einen Feuchtigkeitssensor als zweiten Sensor 4 zu verwendet werden. Der Feuchtigkeitssensor kann durch den Betrieb eines ersten Sensors 1 von einer möglichen Kondensation befreit werden. Durch das Aufheizen des ersten Sensors 3 wird gleichzeitig der zweite Sensor 4 aufgeheizt, so dass kondensierte Flüssigkeit vom Feuchtigkeitssensor 4 verdampft. Auf diese Weise wird ein nach oben erweiterter Messbereich, gegebenenfalls eine genauere Messung mit dem Feuchtigkeitssensor 4, möglich, ohne dass dafür eine eigene Heizvorrichtung beim Feuchtigkeitssensor 4 vorgesehen werden muss.

Durch einen bewusst längeren Heizbetrieb eines oder mehrerer erster Sensoren 3 und die dadurch erreichte Temperaturerhöhung kann ein Ausheizen und eine Regeneration des oder der zweiten Sensoren 4 erreicht werden. Dies ist beispielsweise dann sinnvoll, wenn hohe Konzentrationen von Gasen, Flüssigkeiten oder Analyte vorgelegen haben, die schnell aus einem Gehäuse entfernt werden sollen. Zudem kann ein längeres Aufheizen oder ein kontinuierlicher Betrieb der ersten Sensoren 3 entweder für ein direktes Zersetzen (Verbrennen) eines Analyten auf den geheizten, oft katalytisch aktiv beschichteten ersten Sensoren genutzt werden. Eine aus dem Aufheizen herrührende Temperaturerhöhung bewirkt eine Desorption von Analyten oder von Feuchtigkeit von den Oberflächen der ersten und/oder zweiten Sensoren 3,4 und/oder des Gehäuses.

In einer weiteren Ausführungsform werden die ersten Sensoren in der Weise betrieben, dass eine zeitlich begrenzte Temperaturerhöhung erreicht wird. Dazu wird entweder die Heizleistung der ersten Sensoren vorgesteuert oder es wird ein Temperatursensor vorgesehen, der die Temperatur überwacht, wobei die Heizung der ersten Sensoren entsprechend gesteuert oder geregelt wird. Die zeitlich begrenzte Temperaturerhöhung kann für eine Funktionskontrolle oder eine Funktionserweiterung der zweiten Sensoren 4 genutzt werden. Beispielsweise kann ein Feuchte- und/oder Temperatursensor als zweiter Sensor überprüft werden, indem Temperatur-, Feuchte- und Taupunkt aus einem ungeheizten Zustand, das heißt während der zweiten Phase und einem geheizten Zustand, das heißt während der ersten Phase erfasst und miteinander verglichen werden. Ebenso kann die Temperaturerhöhung zum Beispiel in einem kalorimetrisch messenden Gassensor direkt gemessen werden und zur Funktionsüberprüfung des Gassensors herangezogen werden. Weiterhin kann mit dem Temperatursensorsignal auch die korrekte Funktion der Heizelemente des ersten Sensors überprüft werden. Bei Einschalten und korrekter Funktion des Heizelementes des ersten Sensors muss die angelegte Heizleistung zu einer messbaren und definierten Temperaturerhöhung führen.

In einer weiteren Ausführungsform kann ein Betrieb so erfolgen, dass über einen zweiten Sensor 4, der als Temperatursensor ausgebildet ist, innerhalb der Sensoranordnung eine Gesamttemperaturerhöhung überwacht wird und durch Ansteuerung wenigstens eines der ersten Sensoren 3 die Temperatur unterhalb eines vorgegebenen Grenzwertes gehalten wird. Dies kann beispielsweise durch eine zeitliche Begrenzung der ersten Phase oder durch eine Verlängerung von Pausen zwischen den ersten Phasen erfolgen.

Figur 8 zeigt einen Temperaturverlauf T über die Zeit t bei der Verwendung der ersten Sensoren 3 gemäß den Kennlinien der Figur 7. Anhand des Diagramms der Figur 8 ist deutlich zu erkennen, dass die Temperatur ausgehend vom Zeitpunkt t1 bis zu einem Zeitpunkt t2 auf eine erste Temperatur T1 ansteigt. Nach dem zweiten Zeitpunkt t2 fällt die Temperatur wieder ab. In dieser Ausführungsform wird vorzugsweise zeitlich versetzt zum zweiten Zeitpunkt t2 die zweite Phase durchgeführt, bei der die zweiten Sensoren 4 zur Erfassung der Messwerte verwendet werden. Ein Vergleich zwischen Figur 8 und Figur 6 zeigt, dass die erste Temperatur T1 der Figur 8 höher ist als die zweite Temperatur T2 von Figur 6. Somit eignet sich das Betriebsverfahren gemäß Figur 5 eher für zweite Sensoren 4, die gegenüber einem Temperaturgradienten besonders empfindlich sind. Das Betriebsverfahren gemäß Figur 7 eignet sich besonders gegenüber zweiten Sensoren 4, die gegenüber einer hohen Betriebstemperatur empfindlich sind und beispielsweise gegenüber einem Temperaturgradienten unempfindlich sind.

In einer weiteren Ausführungsform kann bei einer bekannten Heizleistung der Heizelemente der ersten Sensoren eine Umgebungstemperatur über eine Kalibriertabelle abgeschätzt werden, auch wenn nur innerhalb der Sensoranordnung eine Temperaturmessung erfolgt. Bei dieser Temperaturmessung und der bekannten Leistung und damit der bekannten Umgebungstemperatur können zweite Kalibriertabellen auch zur Kompensation von Temperatureffekten auf die Messsignale der zweiten Sensoren angewendet werden. Bei Verwendung mehrerer Temperatursensoren kann die Plausibilität der Temperaturmessung zusätzlich überprüft werden. Zusätzlich zur Heizleistung wird ein Wärmeübergangskoeffizient zur Abgabe der Wärme von der Sensoranordnung an die Umgebung berücksichtigt, der bekannt ist oder gemessen wird. Aufgrund der Heizleistung, dem Wärmeübergangskoeffizienten und der gemessenen Temperatur der Sensoranordnung kann die Umgebungstemperatur abgeschätzt werden. Der vom zweiten Sensor 4 erfasste Messwert kann durch einen Vergleich der Temperatur auf der Sensoranordnung und der abgeschätzten Umgebungstemperatur korrigiert und entsprechend von der Auswerteschaltung ausgegeben werden. Für die Berechnungen und Abschätzungen können vorgegebene Kalibriertabellen verwendet werden, die in der Auswerteschaltung abgespeichert sind. Die Auswerteschaltung 5 führt die Messerfassung, die Messaufbereitung und die Ausgabe der entsprechenden Messsignale durch.

Das beschriebene Verfahren kann für einen gepulsten Heizbetrieb der ersten Sensoren 3 verwendet werden. Auf diese Weise kann eine Regelung der einzustellenden Temperatur, insbesondere eine Höchsttemperatur mithilfe der ersten Sensoren 3 eingestellt werden.

In einer weiteren Ausführungsform werden die ersten Sensoren 3 dazu eingesetzt, um durch ein gemeinsames Einschalten, d. h. Beheizen in einer ersten Phase für einen längeren Zeitraum zum Beispiel von 500 Millisekunden bis mehrere Sekunden, oder durch einen kontinuierlichen Betrieb als Heizelemente in der Sensoranordnung 9 und damit für alle erste und zweite Sensoren 3, 4 eine Temperaturerhöhung zu bewirken. Durch diese Temperaturerhöhung, typischerweise um eine Temperatur von 20 bis 40 ° können folgende Effekte gezielt herbeigeführt werden: Desorption von an Gehäuseoberflächen adsorbierten Gasen beziehungsweise Molekülen. Diese können durch einen Medienzugang entweichen, womit ein Reinigen des Gehäuses stattfinden kann. Desorption von in Sensorschichten gebundenen Molekülen beziehungsweise Gasbestandteilen und damit Regeneration der Sensorschichten der ersten und/oder der zweiten Sensoren 3, 4. Funktionskontrolle eines Temperatursensors sowie der weiteren auf eine Temperaturänderung reagierenden zweiten Sensoren. Verhinderung der Kondensation von Feuchte und dadurch auch Ermöglichung der Feuchtigkeitsmessung bei widrigen Umgebungsbedingungen. Erhöhung der Reaktionsgeschwindigkeit bei diffusionsabhängigen Gassensoren, zum Beispiel bei Sensoren mit Feldeffekttransistoren mit einer polymeren oder metallorganischen Beschichtung. Erniedrigung der Feuchtigkeitsquerempfindlichkeit zum Beispiel bei polymerbasierten kapazitiven Sensoren oder bei Sensoren mit Feldeffekttransistoren.

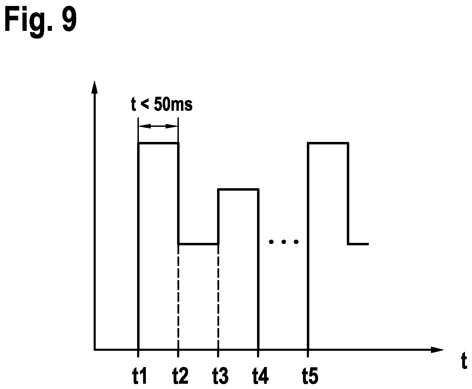

Figur 9 zeigt in einer schematischen Darstellung ein Diagramm, bei dem für eine erste Phase die Temperatur T über die Zeit t aufgetragen ist. Die erste Phase, bei der wenigstens ein erster Sensor 3 beheizt und für eine Messerfassung verwendet wird, startet zu einem ersten Zeitpunkt t1 und endet zu einem vierten Zeitpunkt t4. In dem dargestellten Ausführungsbeispiel startet die erste Phase zum Zeitpunkt t1 mit einer Vorheizphase, bei der der erste Sensor 3 nur aufgeheizt wird, ohne dass eine Messung durchgeführt wird. Als erster Sensor 3 kann beispielsweise ein Gassensor verwendet werden. Die Temperatur kann während der Vorheizphase zum Beispiel bis auf 400 ° erhöht werden. Die Vorheizphase dauert vom ersten Zeitpunkt t1 bis zum zweiten Zeitpunkt t2. Beispielsweise kann die Zeitdauer der Vorheizphase im Bereich von kleiner 50 Millisekunden liegen. An die Vorheizphase schließt sich eine erste Messphase an, die von dem zweiten Zeitpunkt t2 bis zu einem dritten Zeitpunkt t3 dauert. Während der ersten Messphase wird die Heizleistung des ersten Sensors 3 wenigstens reduziert oder abgeschaltet, so dass die Messung während der ersten Messphase bei einer Betriebstemperatur liegt, die kleiner ist als die Aufheiztemperatur während der Vorheizphase. In dem dargestellten Ausführungsbeispiel liegt die erste Betriebstemperatur beispielsweise bei 320 °C.

Abhängig von der gewählten Ausführungsform kann nun die erste Phase enden oder wie in Figur 9 dargestellt ist, sich eine zweite Messphase anschließen. Die zweite Messphase dauert vom dritten Zeitpunkt t3 bis zum vierten Zeitpunkt t4. Während der zweiten Messphase wird wieder eine Messung bei einer zweiten Betriebstemperatur durchgeführt. Die zweite Betriebstemperatur ist jedoch höher als die erste Betriebstemperatur. Dies wird dadurch erreicht, dass die Heizleistung des ersten Sensors 3 wieder erhöht wird. An die zweite Messphase schließt sich nach dem vierten Zeitpunkt t4 eine Abkühlphase an. Abhängig von der gewählten Ausführungsform kann auch während der Abkühlphase im ungeheizten Zustand des ersten Sensors 3 eine Messung durchgeführt werden. Zudem kann während der Abkühlphase die zweite Phase für die Messung mithilfe der oder der zweiten Sensoren 4 durchgeführt werden. Nach einer gewissen Zeitdauer startet erneut eine erste Phase bei einem fünften Zeitpunkt t5.

Eine Zeitdauer für die Vorheizphase kann beispielsweise bei maximal 100 Millisekunden liegen, um den Energieverbrauch gering zu halten. Zudem sollte die Vorheizphase deutlich über der thermischen Zeitkonstante von beispielsweise 10 bis 20 Millisekunden liegen, um langsamere chemische Desorptionsprozesse nach Erreichen der Zieltemperatur zeitlich zu ermöglichen. Die Zeiten der ersten und zweiten Messphase liegen ebenfalls über der thermischen Zeitkonstante. Sinnvolle Zeitdauern sind von der zu messenden Gasart abhängig und liegen beispielsweise im Bereich von 50 bis 200 Millisekunden. Typische Zeiten für die Abkühlphase können im Bereich von 600 bis 900 ms. Typische Zeiten für die Abkühlphase können im Bereich zwischen 600 und 900 Millisekunden liegen.

Während einer Messphase können mehrere Messungen mit dem ersten Sensor 3 durchgeführt werden. In einer Ausführungsform werden beispielsweise auch Messungen mit wenigstens einem zweiten Sensor 4 während der ersten oder zweiten Messphase, d.h. bei einer hohen Betriebstemperatur durchgeführt. Durch einen Vergleich der Messwerte der zweiten Sensoren 4, die während der ersten oder zweiten Messphase der ersten Sensoren 3 erfasst wurden, und Messwerten, die mithilfe der zweiten Sensoren 4 während der Abkühlphase der ersten Sensoren 3 erfasst werden, kann auf den Temperaturgradienten zurückgeschlossen werden. Der Temperaturgradient kann bei der Auswertung der Messwerte der zweiten Sensoren 4 in der Abkühlphase berücksichtigt werden, um den Messwert der zweiten Sensoren 4 zu korrigieren. Dazu können entsprechenden Korrekturtabellen in einem Speicher der Auswerteschaltung abgelegt sein. Dazu werden die Messwerte von den zweiten Sensoren an die Auswerteschaltung übermittelt. Die Auswerteschaltung korrigiert die Messwerte entsprechend der Korrekturtabelle und dem Temperaturgradienten und gibt den korrigierten Messwert aus.

In einer weiteren Ausführungsform werden die ersten Sensoren während der Abkühlphase wenigstens einmal, insbesondere mehrfach sequenziell nacheinander ausgelesen. Die Gültigkeit der Daten, das heißt die Funktionsweise der ersten Sensoren kann dadurch überprüft werden, dass die Messwerte des gleichen Sensors nacheinander innerhalb eines vorgegebenen Intervalls liegen müssen. Das vorgegebene Intervall kann mit dem Temperaturgradienten abgeglichen werden. Die Überprüfung wird beispielsweise von der Auswerteschaltung durchgeführt.

## Patentansprüche

1. Verfahren zum Betreiben einer Sensoranordnung mit einem ersten Sensor und mit einem zweiten Sensor, wobei der zweite Sensor ausgelegt ist, um bei einer Umgebungstemperatur betrieben zu werden, wobei der erste Sensor einen beheizten Sensor darstellt, der ausgelegt ist, um bei einer Betriebstemperatur betrieben zu werden, die über der Umgebungstemperatur liegt, wobei der erste und der zweite Sensor über einen Träger miteinander verbunden sind, wobei der Träger eine thermische Kopplung zwischen dem ersten und dem zweiten Sensor bewirkt, wobei der erste Sensor während einer ersten Phase auf die Betriebstemperatur aufgeheizt wird, wobei während der ersten Phase mit dem ersten Sensor eine Messung durchgeführt wird,
**dadurch gekennzeichnet, dass** in einer zweiten Phase das Aufheizen abgeschaltet wird oder wenigstens reduziert wird, wobei während der zweiten Phase eine Messung mit dem zweiten Sensor durchgeführt wird, und wobei bei einer Auswertung der Messung des zweiten Sensors eine erhöhte Temperatur des zweiten Sensors durch die Aufheizung während der ersten Phase berücksichtigt wird, wobei der erste Sensor (3) als Heizplatte mit einer geheizten Membran oder als beheizter Sensor oder als Sensor für die Messung einer thermischen Leitfähigkeit oder als Gassensor oder als beheizter chemischer Gassensor, insbesondere als Metalloxidsensor ausgebildet ist, und wobei der zweite Sensor (4) als polymerbeschichteter Sensor oder als kapazitiver Sensor oder als kalorimetrisch messender Sensor oder als Luftdrucksensor oder als Feuchtigkeitssensor oder als Gassensor oder als feldeffektbasierter Sensor ausgebildet ist,
wobei zur Aufheizung des ersten Sensors die Heizplatte, ein Heizelement bzw. der beheizte Sensor angesteuert wird.

2. Verfahren nach Anspruch 1, wobei die Temperatur des ersten Sensors erfasst wird, und wobei die Aufheizung während der ersten Phase so gesteuert wird, dass eine vorgegebene Höchsttemperatur für den zweiten Sensors nicht überschritten wird.

3. Verfahren nach Anspruch 2, wobei eine Temperatur für die Aufheizung während der ersten Phase begrenzt wird und/oder ein zeitlicher Abstand zwischen zwei ersten Phasen verlängert wird, um die Höchsttemperatur für den zweiten Sensor nicht zu überschreiten.

4. Verfahren nach einem der vorhergehenden Ansprüche, wobei mit dem zweiten Sensor während der ersten Phase eine Vergleichsmessung durchgeführt wird, und wobei die Vergleichsmessung für eine Bewertung der Funktionsfähigkeit des ersten Sensors und/oder des zweiten Sensors berücksichtigt wird.

5. Verfahren nach einem der vorhergehenden Ansprüche, wobei mit zeitlichen Abständen mehrere erste Phasen durchgeführt werden, und wobei zweite Phasen zwischen zwei ersten Phasen durchgeführt werden.

6. Verfahren nach einem der vorhergehenden Ansprüche, wobei während der ersten Phase eine Vorheizphase erfolgt, in der die Aufheizung des ersten Sensors auf eine erste Temperatur erfolgt, wobei in einer folgenden Messphase der erste Sensor zwei Messungen bei zwei unterschiedlichen Temperaturen durchführt.

7. Verfahren nach Anspruch 6, wobei nach der ersten Phase eine Abkühlphase erfolgt, wobei während der Abkühlphase der erste Sensor eine dritte Messung durchführt.

8. Verfahren nach einem der vorhergehenden Ansprüche, wobei unter Berücksichtigung der Leistung der Aufheizung des ersten Sensors während der ersten Phase und einer Temperaturmessung auf der Sensoranordnung eine Umgebungstemperatur abgeschätzt wird, wobei die abgeschätzte Umgebungstemperatur bei einer Auswertung der Messung des zweiten Sensors berücksichtigt wird, insbesondere ein Messwert des zweiten Sensors korrigiert oder auf eine Fehlfunktion überprüft wird.

9. Verfahren nach einem der vorhergehenden Ansprüche, wobei die Aufheizung während der ersten Phase so gewählt wird, dass eine gewünschte Ausheizung des zweiten Sensors erreicht wird, bevor mit dem zweiten Sensor in einer zweiten Phase eine Messung durchgeführt wird.

10. Sensoranordnung (9) mit einem Träger (1), auf dem ein erster Sensor (3) und ein zweiter Sensor (4) angeordnet sind, wobei der zweite Sensor (4) ausgelegt ist, um bei einer Umgebungstemperatur betrieben zu werden, wobei der erste Sensor (3) ausgelegt ist, um bei einer Betriebstemperatur betrieben zu werden, die über der Umgebungstemperatur liegt, wobei der erste und der zweite Sensor (3,4) über den Träger (1) aneinander gekoppelt sind, wobei der Träger (1) eine thermische Kopplung zwischen dem ersten und dem zweiten Sensor (3,4) bewirkt, wobei eine Auswerteschaltung (5) vorgesehen ist,
**dadurch gekennzeichnet, dass** die Auswerteschaltung (5) ausgebildet ist, um während einer zweiten Phase, bei der die Aufheizung des ersten Sensors abgeschaltet oder wenigstens reduziert ist, einen Messwert mit dem zweiten Sensor zu erfassen, und wobei die Auswerteschaltung ausgebildet ist, um bei einer Auswertung der Messung des zweiten Sensors eine erhöhte Temperatur des zweiten Sensors durch die Aufheizung des ersten Sensors während der ersten Phase zu berücksichtigen, wobei der erste Sensor (3) als Heizplatte mit einer geheizten Membran oder als beheizter Sensor oder als Sensor für die Messung einer thermischen Leitfähigkeit oder als Gassensor oder als beheizter chemischer Gassensor, insbesondere als Metalloxidsensor ausgebildet ist, und wobei der zweite Sensor (4) als polymerbeschichteter Sensor oder als kapazitiver Sensor oder als kalorimetrisch messender Sensor oder als Luftdrucksensor oder als Feuchtigkeitssensor oder als Gassensor oder als feldeffektbasierter Sensor ausgebildet ist,
wobei zur Aufheizung des ersten Sensors die Heizplatte, ein Heizelement bzw. der beheizte Sensor angesteuert wird.

11. Sensoranordnung nach Anspruch 10, wobei die Auswerteschaltung (5) ausgebildet ist, um während der ersten Phase, bei der der erste Sensor (3) aufgeheizt wird, einen Messwert des ersten Sensors zu erfassen.

12. Sensoranordnung nach einem der Ansprüche 11 oder 12, wobei der erste und der zweite Sensor (3,4) in einem Gehäuse (2) angeordnet sind, wobei das Gehäuse (2) einen Medienzugang (7) aufweist, und wobei der erste Sensor (3) näher am Medienzugang (7) angeordnet ist als der zweite Sensor (4), wobei insbesondere der erste Sensor (3) angrenzend am Medienzugang (7) angeordnet ist.

13. Sensoranordnung nach einem der Ansprüche 11 bis 12, wobei der Träger (1) aus einem wärmeleitenden Material aufgebaut ist.

14. Sensoranordnung nach einem der Ansprüche 11 bis 13, wobei der zweite Sensor (4) auf der Auswerteschaltung (5) angeordnet ist, und wobei die Auswerteschaltung (5) auf dem Träger (1) angeordnet ist, und wobei vorzugsweise die Auswerteschaltung (5) über eine thermisch leitende Verbindungsschicht (15) mit dem Träger (1) verbunden ist.

15. Sensoranordnung nach einem der Ansprüche 11 bis 14, **dadurch gekennzeichnet, dass** mehrere erste und/oder zweite Sensoren vorgesehen sind, wobei insbesondere vorgesehen sind, dass vier erste Sensoren und vier zweite Sensoren auf dem Träger räumlich getrennt angeordnet sind.

## Claims

1. Method for operating a sensor assembly comprising a first sensor and a second sensor, the second sensor being designed to be operated at ambient temperature, the first sensor representing a heated sensor which is designed to be operated at an operating temperature which lies above the ambient temperature, the first and the second sensor being connected to each other via a carrier, the carrier effecting thermal coupling between the first and the second sensor, the first sensor being heated to the operating temperature during a first phase, a measurement being carried out with the first sensor during the first phase, **characterized in that**
in a second phase, the heating is switched off or is at least reduced, wherein, during the second phase, a measurement is carried out with the second sensor, and wherein, when evaluating the measurement from the second sensor, an elevated temperature of the second sensor as a result of the heating during the first phase is taken into account,
wherein
the first sensor (3) is formed as a heating plate having a heated membrane or as a heated sensor or as a sensor for the measurement of a thermal conductivity or as a gas sensor or as a heated chemical gas sensor, in particular as a metal oxide sensor, and wherein the second sensor (4) is formed as a polymer-coated sensor or as a capacitive sensor or as a calorimetrically measuring sensor or as an air pressure sensor or as a humidity sensor or as a gas sensor or as a field-effect-based sensor,
wherein the heating plate, a heating element or the heated sensor is activated in order to heat the first sensor.

2. Method according to Claim 1, wherein the temperature of the first sensor is measured, and wherein the heating during the first phase is controlled in such a way that a predefined maximum temperature for the second sensor is not exceeded.

3. Method according to Claim 2, wherein a temperature for the heating during the first phase is limited and/or a time interval between two first phases is lengthened in order not to exceed the maximum temperature for the second sensor.

4. Method according to one of the preceding claims, wherein a comparative measurement is carried out with the second sensor during the first phase, and wherein the comparative measurement is taken into account for an assessment of the serviceability of the first sensor and/or the second sensor.

5. Method according to one of the preceding claims, wherein multiple first phases are carried out with time intervals, and wherein second phases are carried out between two first phases.

6. Method according to one of the preceding claims, wherein a pre-heating phase is carried out during the first phase, in which the heating of the first sensor to a first temperature is carried out, wherein, in a following measuring phase, the first sensor carries out two measurements at two different temperatures.

7. Method according to Claim 6, wherein, after the first phase, a cooling phase is carried out, wherein the first sensor carries out a third measurement during the cooling phase.

8. Method according to one of the preceding claims, wherein, taking into account the output from the heating of the first sensor during the first phase and a temperature measurement on the sensor assembly, an ambient temperature is estimated, wherein the estimated ambient temperature is taken into account when evaluating the measurement from the second sensor, in particular a measured value from the second sensor is corrected or is checked for a malfunction.

9. Method according to one of the preceding claims, wherein the heating during the first phase is chosen such that desired heating of the second sensor is achieved before a measurement is carried out with the second sensor in a second phase.

10. Sensor assembly (9) comprising a carrier (1) on which a first sensor (3) and a second sensor (4) are arranged, the second sensor (4) being designed to be operated at an ambient temperature, the first sensor (3) being designed to be operated at an operating temperature which lies above the ambient temperature, the first and the second sensor (3, 4) being coupled to each other via the carrier (1), the carrier (1) effecting thermal coupling between the first and the second sensor (3, 4), an evaluation circuit (5) being provided, **characterized in that**
the evaluation circuit (5) is designed to capture a measured value with the second sensor during a second phase, in which the heating of the first sensor is switched off or at least reduced, and wherein the evaluation circuit is designed, when evaluating the measurement from the second sensor, to take into account an elevated temperature of the second sensor as a result of the heating of the first sensor during the first phase,
wherein
the first sensor (3) is formed as a heating plate having a heated membrane or as a heated sensor or as a sensor for the measurement of a thermal conductivity or as a gas sensor or as a heated chemical gas sensor, in particular as a metal oxide sensor, and wherein the second sensor (4) is formed as a polymer-coated sensor or as a capacitive sensor or as a calorimetrically measuring sensor or as an air pressure sensor or as a humidity sensor or as a gas sensor or as a field-effect-based sensor,
wherein the heating plate, a heating element or the heated sensor is activated in order to heat the first sensor.

11. Sensor assembly according to Claim 10, wherein the evaluation circuit (5) is designed to capture a measured value from the first sensor during the first phase, in which the first sensor (3) is heated.

12. Sensor assembly according to either of Claims 11 and 12, wherein the first and the second sensor (3, 4) are arranged in a housing (2), wherein the housing (2) has a media access (7), and wherein the first sensor (3) is arranged closer to the media access (7) than the second sensor (4), wherein in particular the first sensor (3) is arranged adjacent to the media access (7).

13. Sensor assembly according to either of Claims 11 and 12, wherein the carrier (1) is made of a thermally conductive material.

14. Sensor assembly according to one of Claims 11 to 13, wherein the second sensor (4) is arranged on the evaluation circuit (5), and wherein the evaluation circuit (5) is arranged on the carrier (1), and wherein the evaluation circuit (5) is preferably connected to the carrier (1) via a thermally conductive connecting layer (15).

15. Sensor assembly according to one of Claims 11 to 14, **characterized in that** multiple first and/or second sensors are provided, wherein provision is in particular made for four first sensors and four second sensors to be arranged in a physically separated manner on the carrier.

## Revendications

1. Procédé de fonctionnement d'un ensemble de capteurs comprenant un premier capteur et un deuxième capteur, le deuxième capteur étant adapté pour fonctionner à la température ambiante, le premier capteur étant un capteur chauffé conçu pour fonctionner à une température de fonctionnement supérieure à la température ambiante, les premier et deuxième capteurs étant reliés entre eux par le biais d'un support, le support réalisant un couplage thermique entre les premier et deuxième capteurs, le premier capteur étant chauffé à la température de fonctionnement pendant une première phase, une mesure étant effectuée avec le premier capteur pendant la première phase,
**caractérisé en ce que**
le chauffage est éteint ou du moins réduit dans une deuxième phase, une mesure étant effectuée avec le deuxième capteur pendant la deuxième phase, et une température élevée du deuxième capteur due au chauffage pendant la première phase étant prise en compte lors d'une évaluation de la mesure du deuxième capteur, le premier capteur (3) étant conçu comme une plaque chauffante pourvue d'une membrane chauffée ou comme un capteur chauffé ou comme un capteur destiné à mesurer une conductivité thermique ou comme un capteur de gaz ou un capteur de gaz chimique chauffé, notamment un capteur d'oxyde métallique et le deuxième capteur (4) étant conçu comme un capteur à revêtement polymère ou un capteur capacitif ou un capteur de mesure calorimétrique ou un capteur de pression d'air ou un capteur d'humidité ou un capteur de gaz ou un capteur à effet de champ, la plaque chauffante, un élément chauffant ou le capteur chauffé étant commandé(e) pour chauffer le premier capteur.

2. Procédé selon la revendication 1, la température du premier capteur étant détectée et le chauffage pendant la première phase étant commandé de manière à ce qu'une température maximale spécifiée pour le deuxième capteur ne soit pas dépassée.

3. Procédé selon la revendication 2, une température destinée au chauffage pendant la première phase étant limitée et/ou un intervalle de temps entre deux premières phases étant étendu pour ne pas dépasser la température maximale du deuxième capteur.

4. Procédé selon l'une des revendications précédentes, une mesure comparative étant effectuée avec le deuxième capteur pendant la première phase, et la mesure comparative étant prise en compte pour évaluer la capacité de fonctionnement du premier capteur et/ou du deuxième capteur.

5. Procédé selon l'une des revendications précédentes, plusieurs premières phases étant effectuées à des intervalles de temps, et des deuxièmes phases étant réalisées entre deux premières phases.

6. Procédé selon l'une des revendications précédentes, un préchauffage, lors duquel le chauffage du premier capteur à une première température est effectué, étant effectué pendant la première phase, le premier capteur effectuant dans une phase de mesure ultérieure deux mesures à deux températures différentes.

7. Procédé selon la revendication 6, une phase de refroidissement étant effectuée après la première phase, le premier capteur effectuant une troisième mesure pendant la phase de refroidissement.

8. Procédé selon l'une des revendications précédentes, la température ambiante étant estimée avec prise en compte de la puissance de chauffage du premier capteur pendant la première phase et d'une mesure de température sur l'ensemble de capteurs, la température ambiante estimée étant prise en compte lors de l'évaluation de la mesure du deuxième capteur, notamment une valeur de mesure du deuxième capteur étant corrigée ou vérifiée pour détecter un dysfonctionnement.

9. Procédé selon l'une des revendications précédentes, ledit chauffage étant choisi pendant la première phase de telle sorte qu'un chauffage souhaité du deuxième capteur est atteint, puis une mesure étant effectuée avec le deuxième capteur dans une deuxième phase.

10. Ensemble de capteurs (9) pourvu d'un support (1) sur lequel un premier capteur (3) et un deuxième capteur (4) sont disposés, le deuxième capteur (4) étant conçu pour fonctionner à la température ambiante, le premier capteur (3) étant conçu pour fonctionner à une température de fonctionnement supérieure à la température ambiante, les premier et deuxième capteurs (3, 4) étant accouplés l'un à l'autre par le biais d'un support (1), le support (1) réalisant un couplage thermique entre les premier et deuxième capteurs (3, 4), un circuit d'évaluation (5) étant prévu,
**caractérisé en ce que** le circuit d'évaluation (5) est conçu pour détecter une valeur de mesure avec le deuxième capteur pendant une deuxième phase dans laquelle le chauffage du premier capteur est éteint ou au moins est réduit, et le circuit d'évaluation étant conçu pour prendre en compte, lors d'une évaluation de la mesure du deuxième capteur, une température élevée du deuxième capteur due au chauffage du premier capteur pendant la première phase, le premier capteur (3) étant conçu comme une plaque chauffante pourvue d'une membrane chauffée ou comme un capteur chauffé ou comme un capteur destiné à mesurer une conductivité thermique ou comme un capteur de gaz ou un capteur de gaz chimique chauffé, notamment un capteur d'oxyde métallique et le deuxième capteur (4) étant conçu comme un capteur à revêtement polymère ou un capteur capacitif ou un capteur de mesure calorimétrique ou un capteur de pression d'air ou un capteur d'humidité ou un capteur de gaz ou un capteur à effet de champ, la plaque chauffante, un élément chauffant ou le capteur chauffé étant commandé pour chauffer le premier capteur.

11. Ensemble de capteurs selon la revendication 10, le circuit d'évaluation (5) étant conçu pour détecter une valeur de mesure du premier capteur pendant la première phase de chauffage dans laquelle le premier capteur (3) est chauffé.

12. Ensemble de capteurs selon l'une des revendications 11 ou 12, les premier et deuxième capteurs (3, 4) étant disposés dans un boîtier (2), le boîtier (2) comportant une entrée de milieu (7), et le premier capteur (3) étant disposé plus près de l'entrée de milieu (7) que le deuxième capteur (4), en particulier le premier capteur (3) étant adjacent à l'entrée de milieu (7).

13. Ensemble de capteurs selon l'une des revendications 11 et 12, le support (1) étant réalisé à partir d'un matériau thermiquement conducteur.

14. Ensemble de capteurs selon l'une des revendications 11 à 13, le deuxième capteur (4) étant disposé sur le circuit d'évaluation (5), et le circuit d'évaluation (5) étant disposé sur le support (1), et le circuit d'évaluation (5) étant de préférence relié au support (1) par une couche de liaison thermoconductrice (15).

15. Ensemble de capteurs selon l'une des revendications 11 à 14, **caractérisé en ce qu'**il est prévu une pluralité de premiers et/ou deuxièmes capteurs, quatre premiers capteurs et quatre deuxièmes capteurs étant notamment prévus qui sont disposés de manière spatialement séparée sur le support.
